(19) Europäisches Patentamt
European Patent Office
Office européen des brevets

(11) EP 1 462 467 A1

# (12) EUROPEAN PATENT APPLICATION

(43) Date of publication:
**29.09.2004 Bulletin 2004/40**

(51) Int Cl.[7]: **C08F 289/00**

(21) Application number: **03251911.8**

(22) Date of filing: **26.03.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Sigma Kalon Services B.V.**
**1422 AD Uithoorn (NL)**

(72) Inventor: **The designation of the inventor has not yet been filed**

(74) Representative: **Walsh, David Patrick**
**Appleyard Lees,**
**15 Clare Road**
**Halifax HX1 2HY (GB)**

## (54) A process for the production of silyl group containing polymer resin

(57) A process for the production of an acid group containing polymer resin comprising the steps of:-

(i) forming a pre-polymerisation composition comprising a monomer having at least one acid group in a side chain thereof and a solvent comprising at least one organic acid and;

(ii) reacting the said composition to form an acid group containing polymer resin incorporating the said organic acid in the solvent thereof.

EP 1 462 467 A1

## Description

The invention relates to a new method for the preparation of acid group containing polymers, in particular, polymers having acid groups in the side chain thereof. The invention also relates to the modification of the acid groups via a transesterification reaction with an acyloxy silane. The invention described herein extends to the reaction of acid-functional polymers with polyacyloxysilanes to prepare new hydrolysable binders for antifouling paints without the need to start from expensive monomers. The invention also extends to the new hydrolysable binders so prepared. In another aspect, the invention relates to the use of such silylated polymers in applications where the hydrolysable silyl ester groups are advantageous. One such application is as a resin or co-resin for self-polishing antifouling paints.

## Background

Antifouling paints are used to prevent and delay the fouling of underwater structures (e.g. ships' bottom, docks, fishnets, and buoys) by various marine organisms such as shells, seaweed, and aquatic bacteria. When such marine organisms adhere and propagate on an underwater structure like the bottom of a ship, the surface roughness of the whole ship may be increased to induce decrease of velocity of the ship or increase of fuel consumption. Further, removal of such aquatic organisms from the ship's bottom needs much labour and a long period of working time. In addition, if these organisms adhere and propagate on an underwater structure such as a steel structure they deteriorate their anticorrosive coating films leading to a reducing of the lifetime of the underwater structure.

Underwater structures are therefore coated with antifouling paint employing polymers containing various hydrolysable groups and more specifically organosilyl groups.

All the silyl polymers used for antifouling paints and described in the patent literature (such as EP 0297505, JP 10245451 A, WO 8402915, JP 63215780 A, EP 131626, US 4593055, US 4594365, JP 63118381 A, EP 0775733, WO 9638508, JP 11116257 A, EP 802243, EP 0714957, JP 07018216 A, JP 01132668 A, JP 05077712 A, JP 01146969 A and US 4957989 and hereby incorporated by reference.) are produced from silylated monomers.

Several processes are known as conventional techniques for the synthesis of said silylated monomers; they have been reviewed recently in EP 1 273 589 (AtoFina) and a more recent description of such synthesis is described in US 6 498 284 B2 (Shin-Etsu).

The polymers used in the above-described antifouling paints are based on silylated carboxylate monomers.

Several processes are known as conventional techniques for the synthesis of said silylated carboxylate monomers.

The solubility of acid-functional acrylic resins is problematic as they are not soluble in the aromatic solvents normally used in anti-fouling paints and use of ethereal or alcoholic solvents is required. WO 02/38627 (AtoFina) describes the use of maleic anhydride instead of (meth)acrylic acid to overcome the solubility problem, the anhydride function is then postfunctionalized.

Polyacyloxysiloxanes are disclosed in US 4 892 907 where they are used as cross-linking agents. Cross-linking of silylated acid polymers is highly undesirable in anti-fouling paints as this leads to gelation of the composition.

Many of the techniques for making hydrocarbyl silyl carboxylate monomers introduce problems of impurities such as residual catalysts and side products into the final products. Impurities can be removed by purification steps carried out prior to polymerisation of the monomer but such steps increase the expense of the process.

For instance, the synthesis of trimethylsilyl methacrylate from methacrylic acid and hexamethyldisilazane is described in A.Chapman & A.D.Jenkins J.Polym.Sci. Polym.Chem.Edn. vol 15, p.3075 (1977). The reaction with hexamethyldisilazane progresses often via a phase with a lot of insoluble matter and yields high volumes of the reactive ammonia gas. Both are big disadvantages for production at industrial scale.

$$2\ R1\text{-}C(O)\text{-}OH + H\text{-}N\text{-}[SiMe_3]_2 \rightarrow \text{insoluble intermediate stage}$$

$$\rightarrow 2\ R1\text{-}C\ (O)\text{-}O\text{-}SiMe_3 + NH_3\uparrow$$

JP 5306290 A describes a process to obtain a methacrylic functional group-containing organosilicon compound. The process comprises reacting methacrylic acid with a halogenoalkylsilane (e.g. trialkylsilylchloride) in the presence of a tertiary amine compound having a cyclic structure. This process has disadvantages such as the reduced availability and storage stability of the silyl chloride. Moreover, the reaction yields as a by-product a hydrogen halide (which provokes the corrosion of the production equipment) or a halide salt (which has to be removed by filtration).

JP 10195084 A discloses the reaction of unsaturated carboxylic acid such as acrylic acid or methacrylic acid with a trialkylsilylhydride compound in the presence of a copper catalyst. One of the disadvantages of this method is the risk of hydrogenation of the unsaturated carboxylic acid due to a side reaction of the produced H2 on the carbon-carbon double bond.

Trialkylsilylcarboxylates of aliphatic carboxylic acids can be obtained by transesterification. H.H.Anderson et al. describe in J.Org.Chem 1716 (1953) the reactions of tri-ethyl silyl acetates with halogenated propionic acids and in J.Org. Chem. 1296 (1954) the reactions of trifluoro silyl acetates or propionates with chloroacetic acid; they distil the acetic or propionic acid under reduced pressure.

Russian chemists (Izv.Akad.Nauk.Ussr.Ser.Khim. 968 (1957)) run similar reactions at much higher temperatures (190-210°C).

JP 95070152 A discloses reactions of trialkylsilylacetates with C6 to C30 carboxylic acids (e.g. palmitic, myristic, benzoic,...) ; the acetic acid is distilled under reduced pressure or azeotropically with hexane.

S.Kozuka et al. in Bull.Chem.Soc.Jap. 52 (7) 1950 (1979) study the kinetics of acyloxy exchange reaction between acyloxysilanes and carboxylic acids. The rate of the reaction has been found to proceed faster with a stronger attacking acid and a more basic leaving acyloxy group.

EP 0204456EP 0342276 (Nippon Paint Co Ltd) disclose the production of metal salts of acid group containing base resins. The salts must be polyorganic salt types and undergo a transesterification of the metal ester groups with a high boiling acid to produce the metal high boiling carboxylate salt of the polymer.

It is one of the objects of the present invention to provide a process for the production of a base resin having acid groups in the side chains thereof.

It is one of the further objects of the present invention to provide a process for the production of silyl modified polymers from such base resins.

It is a still further object of the present invention to provide a more convenient and efficient process for the production of silyl modified polymers.

According to a first aspect of the present invention there is provided a process for the production of an acid group containing polymer resin comprising the steps of:-

forming a pre-polymerisation composition comprising a monomer having at least one acid group in a side chain thereof and a solvent comprising at least one organic acid and

reacting the said composition to form an acid group containing polymer resin incorporating the said organic acid in the solvent thereof.

The acid groups in the side chains of the polymer may be selected from carboxylic acid, sulphonic acid or phosphoric acid groups. Preferably, the acid groups are carboxylic acid groups.

Preferably, the organic acid is used as a co-solvent with a further solvent. The said further solvent may be selected to improve the solubility of the non-polar parts of the polymer.

Advantageously, the use of the acid solvent not only assists the solubility of the acid polymer but is also compatible with the subsequent silylation reaction by not interfering with the process and/or participating in the process. This removes the requirement for an expensive removal step prior to the silylation reaction. Typically, a low boiling acid co-solvent can be easily removed by a suitable technique such as distillation during the silylation reaction and the high boiling acid may be removed by reaction with the unreacted acyloxy groups on the silicon during polyacyloxysilylation. Preferably, therefore, the low boiling acid solvent is selected to be identical with the acid of the leaving acyloxy group of the silylester and a high boiling acid is selected to be capable of a transesterification reaction with acyloxy leaving groups during subsequent polyacyloxysilylation reactions. In this way, by careful selection of the acid solvent for the subsequent silylation reaction the need for post polymerisation purification is avoided.

Preferably, the said polymer resin acid groups may be silylated in a subsequent step. Preferably, the silylation is carried out by transesterification of a silyl ester with the acid groups to produce protected silylester side chain on the polymer polymer and the acid of the ester group from the initial silyl ester. Preferably, the silylation is carried out whilst removing the acid of the initial ester group. Preferably, the ester of the silylating agent is selected so as to form a low boiling acid as a by product of the silylation reaction which can then be removed from the system by a suitable technique such as thermal decomposition, vacuum distillation, azeotropic distillation with water or an organic solvent. Preferably, the preferred removal technique is distillation. This may be via a low boiling azeotrope with an organic solvent or by direct distillation of the acid.

Preferably, when the said polymer resin is to be utilised in a silylation reaction with polyacyloxysilylesters ie having more than one ester group attached to the silicon, the said solvent comprises at least one high boiling organic acid.

Advantageously, use of a high boiling acid solvent in the subsequent silylation reaction of polyacyloxysilanes prevents cross-linking - via the unused acyloxy sites on the reacted silicon and an acid group of a neighbouring polymer chain - by a transesterification reaction with the silyl acyloxy group. The silyl acyloxy group forms its complimentary acid during silylation of the acid group on the polymer or during reaction with the high boiling acid.

Advantageously, the presence of high boiling carboxylic acids will be required in case of reactions with polyacyloxysilanes in order to prevent crosslinking which would lead to gel formation.

Preferably, for monoacyloxysilylation reactions, the preferred resin solvent comprises a low boiling acid which can be removed during the said subsequent silylation reaction together with the acid formed by the silylation reaction.

Advantageously, by utilising solvent comprising an organic acid during preparation of the acid polymer resin, the solubility of the acid polymer is improved. A still further advantage is that the organic acid so introduced may be chosen to be compatible with the mono or polyacyloxysilyesters used in the subsequent silylation reaction to avoid unwanted side reactions.

Preferably, the organic acid in the solvent is chosen to be the acid complement of the acyloxy group if subsequent monoacyloxysilylation is required. In this way, the removal of the solvent acid and organic acid from the transesterification can take place simultaneously without the requirement for a pre-removal of acid step.

The number of acid groups in the acid polymer is not restricted. However, cross-linking reactions are more likely where the polymer acid content is high during polyacyloxysilylation so the content of high boiling organic acid in such cases may be chosen to restrict cross-linking and subsequent gelation.

The term "low boiling" is used to contrast with "high boiling" and vice versa and the terms should not be taken as a restriction on the boiling point of the acid. Preferably, the term should be taken to be a comparison with the acyloxy leaving group of the silyl ester to be used in the subsequent silylation reaction so that a "high" boiling organic acid may be taken to be one that boils at a higher temperature than the acid of the acyloxy leaving group of the silyl ester whereas "low" boiling organic acid should be taken as a reference to an organic acid having the same or similar boiling point as the acyloxy leaving group or one which forms a low boiling azeotrope therewith ie one that can be conveniently removed during a subsequent silylation reaction.

Preferably, the pre-polymerisation composition comprises other monomers as required to give the final polymer with the required characteristics including the required frequency of acid groups along the polymer backbone. For instance, vinyl acids such as alkacrylic acids and acrylic acid can be copolymerised with suitable alkacrylates such as methyl methacrylate and alk acrylates such as ethyl and butyl acrylate. In this respect, the introduction of acid groups into polymers are known to those skilled in the art.

Preferably, the boiling point of the organic acid is between 0°C - 220°C, more preferably, 60°C - 190°C, most preferably, 110°C-160°C.

Typically, the boiling point of a low boiling acid is in a range which allows it to be removed from the system under conditions which do not cause decomposition of the reactants or products. For instance, the low boiling acid should be removable from the system below the decomposition temperature of the silyl ester or the silylated polymer.

Preferably, the low boiling acid has a boiling point in the range 0°C - 200°C, more preferably, 60°C - 170°C, most preferably, 110°C-140°C.

Typically, the boiling point of a high boiling acid is at least 15°C higher than the corresponding low boiling acid, more preferably, at least 20°C higher, most preferably, at least 25°C higher. Typically, the boiling point of the high boiling acid is in the range 20°C - 220°C, more preferably, 80°C - 190°C, most preferably, 130°C-160°C.

Suitable organic acid solvents may be selected from acetic acid, enanthic acid, cychlohexane carboxylic acid, propionic acid, glycolic acid, acrylic acid, methacrylic acid, benzoic acid, salicylic acid, 3,5-dichlorobenzoic acid, lauric acid, stearic acid, nitrobenzoic acid, linoleic acid, ricinoleic acetic acid, propionic acid, oxalic acid, lactic acid, pivalic acid valeric acid, dimethyl acid, 12-hydroxy stearic acid, fluoroacetic acid, pulvic acid, abietic acid, mercaptobenzothiazole, O-cresotinic acid, naphthol-1-caboxylic acid, p-phenyl benzene sulfonic acid, p-oxy-benzoic acid, chloroacetic acid, dichloroacetic acid, naphthenic acid, beta - naphthalene sulfonic acid, naphthol-1-sulfonic acid, 5-chloro- alpha , alpha -bis (3,5-dichloro-2-hydroxy phenyl) toluene sulfonic acid, p-phenyl benzoic acid, p-toluene sulfonic acid, p-benzene chlorosulfonic acid, dimethyl dithio carbamic acid, diethyl dithio carbamic acid, dibutyl dithio carbamic acid, lithocholic acid, phenoxy acetic acid, 2,4-dichlorophenoxy acetic acid, oleic acid, versatic acid, nicotinic acid, penicillic acid and the like. or their sulfonic acid or phosphoric acid equivalents.

The low boiling organic acids may be independently selected from one or more of acetic acid, propionic acid, oxalic acid, lactic acid, pivalic acid valeric acid, dimethyl acetic acid, enanthic acid, cychlohexane carboxylic acid, propionic acid, glycolic acid, acrylic acid, methacrylic acid and the like or their sulfonic acid or phosphoric acid equivalents.

The high boiling organic monobasic acid may be selected to have fungicidal or antifouling properties. In any case, the organic acids include aliphatic, aromatic, alicyclic and heterocyclic organic acids.

Typical examples of the high boiling acids include benzoic acid, salicylic acid, 3,5-dichlorobenzoic acid, lauric acid, stearic acid, nitrobenzoic acid, linoleic acid, ricinoleic acid, 12-hydroxy stearic acid, fluoroacetic acid, pulvic acid, abietic acid, mercaptobenzothiazole, O-cresotinic acid, naphthol-1-caboxylic acid, p-phenyl benzene sulfonic acid, p-oxy-benzoic acid, chloroacetic acid, dichloroacetic acid, naphthenic acid, beta - naphthalene sulfonic acid, naphthol-1-sulfonic acid, 5-chloro- alpha , alpha -bis (3,5-dichloro-2-hydroxy phenyl) toluene sulfonic acid, p-phenyl benzoic acid, p-toluene sulfonic acid, p-benzene chlorosulfonic acid, dimethyl dithio carbamic acid, diethyl dithio carbamic acid,

dibutyl dithio carbamic acid, lithocholic acid, phenoxy acetic acid, 2,4-dichlorophenoxy acetic acid, oleic acid, versatic acid, nicotinic acid, penicillic acid and the like.

The reaction may be easily proceeded by merely mixing the materials and heating the mixture. At that time, it is however, necessary to continuously remove the formed low boiling organic basic acid out of the system by, for example, thermal decomposition, vacuum distillation, azeotropic distillation with water or an organic solvent and the like.

The acid group containing polymer may be any suitable coating polymer having acid groups on the side chains thereof. The acid group containing polymers obtained by the process of the invention can be homo or co-polymers (including terpolymers, etc) having acid groups in the side chains such as those derived from one or more monomers such as: vinyl monomers including acrylic acid , alkacrylic acids such as methacrylic acid, polyester monomers; alkyd monomers; and epoxy resin monomers.

The silylated polymers and copolymers of said monomers are useful in coating or paint composition. More preferably they are used as binders in antifouling coating compositions. When used in an antifouling coating composition, they give a film which undergoes neither cracking nor peeling and shows moderate hydrolysability to dissolve into seawater constantly at an adequate rate and which therefore exhibits excellent antifouling property for long term.

The antifouling coating compositions prepared using the polymers obtained by the process of the invention are tin-free coatings and provide an alternative to the present self-polishing coating technology based on hydrolysable tributyl tin polymers (the use of which is due to be banned in antifouling paints by 2003). The organosilylated polymers provided by the process of the invention compared to organotin compounds are less toxic, less polar, more hydrophobic and more stable.

Preferably, there is no limit on the molecular weight (Mw) of the acid polymer product. However, the molecular weight is preferably, in the range 2 to 1000 kD, more preferably, 3 to 500 kD, most preferably, 4 to 300 kD.

Preferably, the polymerisation reaction is carried out using a suitable initiator. Suitable initiators are known to those skilled in the art. A suitable free radical initiator for polyacrylates is Vazo 67.

Suitable additives known to the skilled person may be added to the base resin including suitable antifouling agents, plasticizer and hydrolysis regulators, hydrolysis regulators, pigments and other additives.

Typically, the polymerisation reaction is carried out in the range 0°C - 200°C, more preferably, 60-170°C, most preferably, 70-140°C.

Preferably, the level of acid bearing side chain and/or acid terminated monomer at the start of the polymerisation reaction as compared with total monomer is in the range 0.01 - 80% w/w, more preferably, 0.1 - 30%w/w, most preferably, 0.5-25% w/w.

Preferably, the level of acid co-solvent expressed as a % of total solvent at the start of the polymerisation reaction is in the range 1-100% w/w, more preferably, 2-50% w/w, most preferably, 5-30% w/w. In any case, a suitable level is selected in accordance with the level of acid monomer in the pre-polymer mix.

Preferably, the solvent is at least 10 wt% of the total reaction mix at the start of the polymerisation reaction, more preferably, at least 20 wt%, most preferably, at least 30 wt%. The polymerisation reaction may be carried out at atmospheric pressure although both higher and lower pressures are also possible.

Suitable ranges of solvent are 1-99wt% of the total reaction mix, more preferably, 20-80 wt%, most preferably 30-70wt%.

Preferably, the polymer as prepared in accordance with the invention has 20-10,000 monomer units, more preferably, 30-5,000 monomer units, most preferably 40-3,000 monomer units in the average polymer chain.

As used herein, the term "polymer" refers to the product of a polymerisation reaction, and is inclusive of homopolymers, copolymers, terpolymers, etc.

As used herein, the term "copolymer" refers to polymers formed by the polymerisation reaction of at least two different monomers.

In a subsequent silylation reaction, the process may be generally described as a process for the protection of acid group containing side chains and/or terminal acid groups on polymers by reaction of at least one polymer acid group of formula (I)

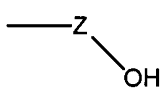 (I)

with a hydrocarbylsilyl compound of formula (II)

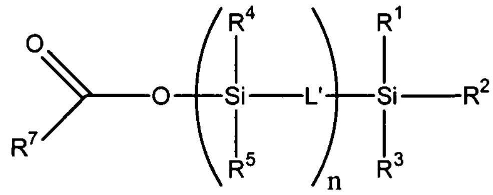

(II)

wherein each $R^4$ and $R^5$ may be hydroxyl or may be independently selected from alkyl, aryl, alkoxyl, aryloxyl, -L' -$SiR^1R^2R^3$, -L' - $(SiR^4R^5L')_n$-$SiR^1R^2R^3$, alkenyl, alkynyl, aralkyl or aralkyloxyl radicals optionally substituted by one or more substituents independently selected from the group comprising alkyl, alkoxyl, aralkyl, aralkyloxyl, hydroxyl, aryl, aryloxyl, halogen, amino (preferably, tertiary amino) or amino alkyl radicals, or $R_4$ or $R_5$ may independently be an -O-C (O)-$R^8$-group, wherein $R^8$ is defined as $R^7$ below;
wherein each $R^1$, $R^2$ and $R^3$ may independently represent hydrogen, hydroxyl, alkyl, alkenyl, alkynyl, alkoxyl, aryl, aryloxyl, aralkyl or aralkyloxyl radical optionally substituted by one or more substituents independently selected from the group comprising alkyl, alkoxyl, aralkyl, aralkyloxyl, aryl, aryloxyl, halogen, hydroxyl, amino (preferably, tertiary amino) or amino alkyl radicals, or $R^1$, $R^2$ or $R^3$ may independently be an -O-C(O)-$R^8$- group,
L' represents O, S, or $NR_6$, where $R_6$ is defined as is $R^7$ below,
each n independently represents a number of -$Si(R_4)$ $(R_5)$-L'- groups from 0 to 1000,
wherein $R_7$ is a hydrogen atom, an aralkyl, aryl, alkenyl, alkynyl, or alkyl group optionally substituted, in the case of the hydrocarbyl radicals with one or more substituents selected from the equivalent substituents as defined for $R^1$, $R^2$, $R^3$, $R^4$ and $R^5$ above;
while removing the formed acid group of formula (IV)

$$R^7C(O)OH \quad (IV)$$

from the system to produce at least one protected acid group of formula (III)

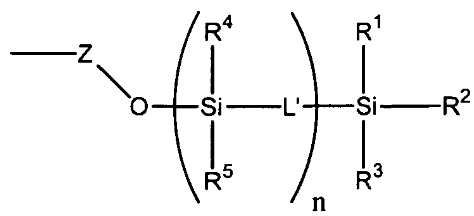

(III)

wherein Z represents:

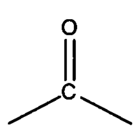 , 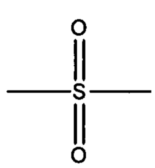 , 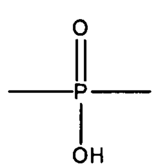 or 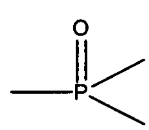

and $R^1$, $R^2$, $R^3$, $R^4$, $R^5$, $L^1$ and n are defined above except where $R^1$, $R^2$, $R^3$, $R^4$or $R^5$ are an --O-C (O) -$R^8$ group in formula II they may be replaced by an -O-C(O)-$R^9$ group in formula III;
wherein $R^9$ represents a hydrocarbyl or substituted hydrocarbyl group, wherein said substituted hydrocarbyl is substituted by one or more substituents independently selected from the group comprising alkyl, alkoxyl, aralkyl, aralkyloxyl, aryl, aryloxyl, hydroxyl, halogen, amino (preferably, tertiary amino) or amino alkyl radicals.

Preferably, the organic acid solvent comprises an acid of formula $R^7C$ (O) OH when all of the radicals $R^1$, $R^2$ , $R^3$ , $R^4$ or $R^5$ are not an -O-C (O) -$R^8$- group in formula II. Preferably, the organic acid solvent comprises an acid of formula HO-C(O) -$R^9$ when one or more of the radicals $R^1$, $R^2$, $R^3$ , $R^4$ or $R^5$ are an -O-C (O) -$R^8$ group in formula II. Preferably, the said $R^9$ group is the hydrocarbyl residue of a higher boiling acid relative to the boiling point of the acid of which $R^8$ forms the hydrocarbyl residue. The residue $R^8$ may be the same or different than $R^7$ in formula II. Preferably, $R^8$ is the same as $R^7$ in any compound of formula II.

The polymer which may be represented as $P^1$ is a polymer having the indicated acid containing side chain or terminal group, preferably a plurality of such side chains branching at intervals along the length thereof and/or terminating the polymer chain.

Preferably, $P^1$ is a polymer having more than 30 carbons in the polymer chain, more preferably, more than 50 carbons in the polymer chain, most preferably, more than 80 carbons in the polymer chain. Preferably, the number of carbons in the chain is calculated from the weight and/or number average molecular weight of the polymer chain.

Preferably, the polymerisation reaction is carried out in a suitable co-solvent aswell as the organic acid. In addition, the silylation may be carried out in a suitable co-solvent in addition to the organic acid.

Suitable co-solvents which can be used in the polymerisation orsilylation reaction may be independently selected from non polar inert solvents, cyclic and noncyclic aliphatic hydrocarbons, aromatic hydrocarbons, cyclic and non cyclic ethers, esters and the like, or the produced volatile acid (IV)in the silylation reaction.

Suitable co-solvents may be independently selected from pentane, cyclopentane, hexane, heptane, cyclohexane, toluene, xylene, benzene, mesitylene, ethylbenzene, octane, decane, decahydronaphthalene, diethyl ether, diisopropyl ether, diisobutyl ether and the like or mixtures thereof,

Especially preferred solvents are those which allow reactive distillation ie. which cause no distillation of any of the reactants but which allow preferential distillation of the produced volatile acid (IV) to drive the equilibrium to the right.

More especially preferred co-solvents are those which form a low boiling azeotrope with distilled $R^7$-C (O) OH during silylation.

Most preferably, the co-solvents are independently selected from pentane, hexane, heptane, cyclohexane, toluene and xylene.

Preferably, the temperature of the reaction depends on the boiling point of any azeotrope that has to be distilled, the shape of the reactor and the height of any distillation column.

Typically, the silylation reaction is carried out in the range 0°C - 200°C, more preferably, 60-170°C, most preferably, 110-140°C.

Preferably, the molar ratio of silylester:acid groups on the polymer at the start of the silylation reaction is between 1:100 and 100:1, more preferably between 10:1 and 1:10, most preferably, between 2:1 and 1:2. Preferably, the molar ratio of silylester:acid groups is approximately 1:1.

Preferably, the solvent is at least 10 wt% of the total reaction mix at the start of the silylation reaction, more preferably, at least 20 wt%, most preferably, at least 30 wt%. The reaction may be carried out at atmospheric pressure although both higher and lower pressures are also possible.

Suitable ranges of solvent are 1-99wt% of the total silylation reaction mix, more preferably, 20-50 wt%, most preferably 30-40wt%.

Preferably, $R_4$ and $R_5$ each independently represent an alkyl, an alkoxyl, an aryl, an hydroxyl group or an -L'-($SiR_4R_5$L') $_n$-$SiR_1R_2R_3$ group, wherein L', $R_1$, $R_2$, $R_3$, $R_4$ and $R_5$ are as defined above and wherein preferably, n=0-100 and more preferably, n=0-10, most preferably n=0 but is also possibly 1, 2, 3, 4 or 5, preferably 1.

More preferably, $R_4$ and $R_5$ in formula (II) are each independently selected from the group comprising an alkyl group, an hydroxyl group, an alkoxyl group or an -L'-($SiR_4R_5$L'/)$_n$-$SiR_1R_2R_3$ group, wherein L', $R_1$, $R_2$, $R_3$, $R_4$ and $R_5$ are as defined above. Most preferably, $R^1$, $R^2$, $R^3$, $R^4$ and $R^5$ each independently represent an alkyl group. The said alkyl groups may be branched or linear.

Preferably L' represents O.

Preferably Z represents C.

Preferably, the groups $R^1$ and $R^2$ and $R^3$ are the same. Equally preferably, the groups $R^4$ and $R^5$ are the same.

Preferably, when $R^4$ or $R^5$ is selected as -L'-($SiR^4R^5$L' )$_n$-$SiR^1R^2R^3$, the $R^4$ and $R^5$ groups attached to the silicon radical in the selected group are not themselves, -L'-($SiR^4R^5$L' ) $_n$-$SiR^1R^2R^3$.

Preferably, $R^1$, $R^2$, $R^3$, $R^4$, $R^5$, $R^7$, $R^8$ and $R^9$ each independently represent a hydrogen atom, an alkyl or an aryl group.

More preferably, $R^1$, $R^2$, $R^3$, $R^4$, $R^5$, $R^7$ , $R^8$ and $R^9$ each independently represent an alkyl group.

According to an embodiment of the present invention, $R^1$, $R^2$, $R^3$, $R^9$, $R^5$ , $R^6$, $R^7$ and $R^8$ are each independently selected from the group comprising methyl, ethyl, propyl, isopropyl, isobutyl, n-butyl, sec-butyl, t-butyl. Preferably,

when they are alkyl groups, $R^1$, $R^2$, $R^3$, $R^4$, $R^5$ $R^7$ and $R^8$ are methyl.

When $R^1$, $R^2$ and $R^3$ are alkyl groups they are preferably, independently selected from the group consisting of C1 to C8 alkyl groups, preferably C1 to C4, more preferably methyl, ethyl, isopropyl and n-butyl. The said alkyl groups may be branched or linear.

Preferably, n as used herein each independently represent 0 to 500, more preferably, 1 to 100, most preferably 4 to 50. Especially preferred values for n is selected from 0, 1, 2, 3, 4 or 5.

As used herein, the term "independently selected" or "independently represent" indicates that the or each radical R or other parameter so described, can be identical or different. For example, each $R^4$ in compound of formula (II) may be different for each value of n.

The term "alkyl", as used herein, relates to saturated hydrocarbon radicals having straight, branched, polycyclic or cyclic moieties or combinations thereof and contains 1 to 20 carbon atoms, preferably 1 to 10 carbon atoms, more preferably 1 to 8 carbon atoms, still more preferably 1 to 6 carbon atoms, yet more preferably 1 to 4 carbon atoms. Examples of such radicals include may be independently selected from methyl, ethyl, n-propyl, isopropyl n-butyl, isobutyl, set-butyl, tert-butyl, 2-methylbutyl, pentyl, iso-amyl, hexyl, cyclohexyl, 3-methylpentyl, octyl and the like.

The term "alkenyl", as used herein, relates to hydrocarbon radicals having one or several double bonds, having straight, branched, polycyclic or cyclic moieties or combinations thereof and containing from 2 to 18 carbon atoms, preferably 2 to 10 carbon atoms, more preferably from 2 to 8 carbon atoms, still more preferably 2 to 6 carbon atoms, yet more preferably 2 to 4 carbon atoms. Examples of alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like.

The term "alkynyl", as used herein, relates to hydrocarbon radicals having one or several triple bonds, having straight, branched, polycyclic or cyclic moieties or combinations thereof and having from 2 to 18 carbon atoms, preferably 2 to 10 carbon atoms, more preferably from 2 to 8 carbon atoms, still more preferably from 2 to 6 carbon atoms, yet more preferably 2 to 4 carbon atoms. Examples of alkynyl radicals include ethynyl, propynyl, (propargyl), butynyl, pentynyl, hexynyl and the like.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. Said radical may be optionally substituted with one or more substituents independently selected from alkyl, alkoxy, halogen, hydroxyl or amino radicals. Examples of aryl include phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like.

The term "aralkyl" as used herein, relates to a group of the formula alkyl-aryl, in which alkyl and aryl have the same meaning as defined above. Examples of aralkyl radicals include benzyl, phenethyl, dibenzylmethyl, methylphenylmethyl, 3- (2-naphthyl)-butyl, and the like.

Examples of the carboxyl radical part of formula (IV) may include but are not limited to formyl, acetyl, propionyl and butyryl.

Examples of the carboxyl radical part of formula $R^9C(O)OH$ may independently include but are not limited to acetyl, propionyl, butyryl, pivaloyl, oxaloyl, malonyl, succinyl, glutaryl, adipoyl, benzoyl, phthaloyl, isobutyroyl, sec-butyroyl, octanoyl, isooctanoyl, nonanoyl, isononanoyl, abietyl, dehydroabietyl, dihydroabietyl, naphtenyl, anthracenyl, abietyl dimer (Dymerex®), dihydroabietyl (Foral®) and the like and polymers or copolymers thereof.

Examples of the organosilylated carboxylate compounds of general formula (II) include but are not limited to trimethylsilylformiate, dimethylsilyldiformiate, methylsilyltriformiate, tri-n-butyl 1-acetoxy-silane, di-n-butyl 1,1-diacetoxy-silane, n-butyl 1,1,1-triacetoxy-silane, tri-n-propyl-1-acetoxy silane, di-n-propyl 1,1-diacetoxy-silane, n-propyl 1,1,1-triacetoxy-silane, tri-t-butyl-1-acetoxy-silane, tri-isopropyl-1-acetoxy-silane, tri-isobutyl-1-acetoxy-silane, tri-methyl-1-acetoxysilane, di- methyl 1,1-diacetoxy-silane, methyl 1,1,1-triacetoxy-silane, triethyl- 1-acetoxy-silane, tribenzyl-1-acetoxy-silane, triamyl- 1-acetoxy-silane, triphenyl- 1-acetoxy-silane, trimethylsilylpropionate, t-butyldimethylsilylacetate, pentamethyl-1-acetoxydisiloxane, heptamethyl-1-acetoxy-trisiloxane, nonamethyl-1-acetoxy-tetrasiloxane, nonaethyl-1-acetoxytetrasiloxane, nona-t-butyl-1-acetoxy-tetrasiloxane, nonabenzyl-1-acetoxy-tetrasiloxane, nona-isopropyl-1-acetoxy-tetrasiloxane, nona-n-propyl-1-acetoxytetrasiloxane, nona-isobutyl-1-acetoxy-tetrasiloxane, nona-amyl-1-acetoxy-tetrasiloxane, nona-n-butyl-1-acetoxytetrasiloxane, nona-dodecyl-1-acetoxy-tetrasiloxane, nonahexyl-1-acetoxy-tetrasiloxane, nona-phenyl-1-acetoxytetrasiloxane, nona-octyl-1-acetoxy-tetrasiloxane, undecamethyl-1-acetoxy-pentasiloxane, undecaethyl-1-acetoxy-pentasiloxane, undeca-t-butyl-1-acetoxypentasiloxane, undecabenzyl-1-acetoxy-pentasiloxane, undeca-isopropyl-1-acetoxy-pentasiloxane, undeca-n-propyl-1-acetoxy-pentasiloxane, undeca-isobutyl-1-acetoxypentasiloxane, undeca-amyl-1-acetoxy-pentasiloxane, undeca-n-butyl-1-acetoxy-pentasiloxane, undeca-dodecyl-1-acetoxy-pentasiloxane, undeca-hexyl-1-acetoxypentasiloxane, undeca-phenyl-1-acetoxy-pentasiloxane, undeca-octyl-1-acetoxy-pentasiloxane tridecamethyl-1-acetoxy-hexasiloxane, tridecaethyl-1-acetoxy-hexasiloxane, trideca-t-butyl-1-acetoxy-hexasiloxane, tridecabenzyl-1-acetoxy-hexasiloxane, trideca-isopropyl-1-acetoxyhexasiloxane, trideca-n-propyl-1-acetoxy-hexasiloxane, trideca-isobutyl-1-acetoxy-hexasiloxane, trideca-amyl-1-acetoxy-hexasiloxane, trideca-n-butyl-1-acetoxyhexasiloxane, trideca-dodecyl-1-acetoxy-hexasiloxane, trideca-hexyl-1-acetoxy-hexasiloxane, trideca-phenyl-1-acetoxy-hexasiloxane, trideca-octyl-1-acetoxyhexasiloxane.

Typical examples of the carboxyl part of formula II are acetyl, propionyl, butyryl.

$R^7$ and $R^8$ may independently be partially or totally hydrogenated alkyl, aralkyl or aryl radicals.

For instance, the acyloxysilanes may be partially or totally hydrogenated carboxylate compounds as defined above. Typically, the halogenated carboxylates are fluorinated or chlorinated.

Examples of such compounds include: trimethylsilyltrifluoroacetate and trimethylsilyltrichloroacetate.

The process of the invention enables the production of the organosilylated carboxylate polymers with exactly the desired number of the hydrocarbylsilyl protecting units.

According to one preferred embodiment, the organosilylated carboxylate polymers obtained by the process of the invention have a number of dihydrocarbylsiloxane units (n) equal to 0.

According to another preferred embodiment, the organosilylated carboxylates obtained by the process of the invention have a number of dihydrocarbylsiloxane units (n) from 1 to 200, preferably from 1 to 19, more preferably from 1 to 4.

The reaction progress may be monitored by any suitable analytical method as well as with the determination of the amount of acid distilled.

The advantage of this invention is that the process uses reactants, which can be easily handled. Another advantage lies in the simplicity and safety of the procedure (no filtration of salt or trapping of corrosive gaseous matter). Furthermore, another advantage is that the reaction may take place without any added catalyst and can be performed under reduced pressure. A further advantage is that the formed carboxylic acid may be removed, preferably, under distillation, preferably, azeotropic distillation. Due to its shortness, its easy work-up procedure and its high yield the process of the present invention can be considered as a substantial improvement over the existing methods described above.

The claimed synthesis route can be carried out at high temperatures and is therefore quick and efficient. The claimed route can be used for the synthesis of hydrolysable trialkylsilyl ester bearing polymers which can be used as resins for tin-free self polishing anti-fouling paints without having recourse to use of the expensive and difficult to prepare trialkylsilyl(meth)acrylate monomers.

The invention will now be described by way of illustration only and with reference to the accompanying examples.

Examples: (According to the invention)

Example 1 Preparation of Acid Polymer

107 g Foral AX-E (hydrogenated rosin) was dissolved in 1473 g xylene and was put in a 5L 4-necked flask and kept under nitrogen. The four necks of the flask were equipped with stirring means, a reflux cooler, a thermometer for temperature control of the reaction, and means for addition of the monomers.
A premix was prepared in a separate vessel; it contained
180 g of butyl acrylate (BA) [10.0 w% of monomers]
810 g of methyl acrylate (MeA) [45.0 w% of monomers]
27 g of methacrylic acid (MA) [1.5 w% of monomers]
423 g of methylethacrylate (MMA) [ 23.5w% of monomers]
360 g of vinyl pyrolidone (VP) [20.0 w% of monomers]
25.2 g (= 1.4 w% on total monomer weight) of VAZO 67.
The premix was added drop by drop to the reaction vessel (total time: about 5 hours) whilst maintaining the temperature at 100°C. The temperature was increased up to 110 °C after completion of the addition. 45 minutes after the end of the addition of the premix, 3 post-addition of 1.8 g (0.1 w%) VAZO67 had been made with 45 minutes intervals. Then the binder had been cooled and thinned down with 327 g xylene. The binder had a viscosity of 9 dPa.s, a solids of 51 % and a Mw of 18.2 kD (Mw/Mn= 2.4). The binder had a measured acid value of 9.4 mg KOH/g resin solution.

Example 2 Preparation of Acid polymer

141 g Foral AX-E (hydrogenated rosin) was dissolved in 1227 g xylene and was put in a 5L 4-necked flask and kept under nitrogen. The four necks of the flask were equipped with stirring means, a reflux cooler, a thermometer for temperature control of the reaction, and means for addition of the monomers.

A premix was prepared in a separate vessel; it contained:
396 g of butyl acrylate (BA) [26.4 w% of monomers]
36 g of methacrylic acid (MA) [ 2.4 w% of monomers]
909 g of methylmethacrylate (MMA) [60.6 w% of monomers]
159 g of vinyl pyrolidone (VP) (10.6 w% of monomers]
21.0 g (= 1.4% on total monomer weight) of VAZO 67.
The premix was added drop by drop to the reaction vessel (total time : about 5 hours) whilst maintaining the temperature at 100 °C. 45 minutes after the end of the addition of the premix, 3 post-additions of 1.5 g (0.1 w%) VAZO67 had been made with 45 minutes intervals. Then the mixture was heated to 120 °C for 1 hour. Then the binder had a viscosity of 41 dPa.s, a solids of 50.6 % and a Mw of 23.0 kD (Mw/Mn = 2.3). The binder had a measured acid value of 14.2 mg KOH/g resin solution.

Example 3 The conversion of acid polymer with DADMSi

821 g of resin of example 1 with 11.9 g diacetoxydimethyl silane and 100 g xylene was put in a 2 L flask equipped with a mechanical stirrer, a thermometer, and a distillation column with cooler and receiver. The mixture had been heated up to 140 - 145 °C. Distillation started at 115 °C and had been ended at 136 °C. The distillate, xylene and acetic acid, had a volume of 149 mL and contained 91 % of the acetic acid that could be generated by the reaction. The remaining resin had a viscosity of 10 dPa.s and a solids of 52.9 %.

Example 4 The conversion of acid polymer with Silopren

845 g of resin of example 1, 24 g of Foral AX-E, 16.55 g ethyltriacetoxysilane (Silopren) and 200 g xylene were put in a 2L flask equipped with a mechanical stirrer, a thermometer, and a distillation column with cooler and receiver. The mixture had been heated up to 140-145 °C. Distillation started at 115 °C and had been ended at 136 °C. The distillate, xylene and acetic acid, had a volume of 285 ml and contained 84 % of the acetic acid that could be generated by the reaction. The remaining resin had a viscosity of 23 dPa.s and a solids of 54.2 %.

The synthesis of examples 5 - 7 are described in table format.
The same table gives the yield of the distillation processs for all the examples (3 - 7) of the derivatization process as well as their filmforming properties and the behaviour of their films in water and alkaline water.

Table 1:

| Examples 3 - 7; Acid resin derivatization | | | | | |
|---|---|---|---|---|---|
| Ex → | 3 | 4 | 5 | 6 | 7 |
| Resin Ex.1 (g) | 821 | 845 | | | |
| Resin Ex.2 (g) | | | 1000 | 970 | 970 |
| Foral AX-E (g) | | 24 | 42 | | |
| Naphtenic acid (g) | | | | 116 | |
| Cekanoic acid (g) | | | | | 77 |
| DADMSi (g) | 11.9 | | | | |
| $ETAc_3Si$ (g) | | 16.6 | 29.5 | 57 | 57 |
| Xylene (g) | 100 | 200 | 300 | 500 | 500 |
| Distillate (mL) | 149 | 285 | 390 | 630 | 630 |
| Acetic acid Yield (%) | 91 | 84 | 89 | 96.5 | 92.8 |
| dPa.s | 10 | 23 | 117 | 40 | 44 |
| Solids (w%) | 52.9 | 54.2 | 56.8 | 52.1 | 53.8 |
| Mw (kD) | | | 23.2 | 23.4 | - |
| Mw/Mn | | | 2.2 | 2.2 | - |
| Appearance Dry film | ok | lightl ytacky | ok | Ok | Irregular |

Table 1: (continued)

| Examples 3 - 7; Acid resin derivatization | | | | | |
|---|---|---|---|---|---|
| Ex → | 3 | 4 | 5 | 6 | 7 |
| Film 24 hrs in water | Haze & soft | White & soft | White (cells) | White (cells) | White & soft |
| Minutes to dissolve at pH 12.3 | 10 min.<br>pH 11 | 15 | 60 | 60 | > 60 |

Examples: (According to the invention)

**Example 8 Preparation of acid acrylate polymer**

1320 g xylene and 180 g acetic acid were put in a 4L 4-necked flask and kept under nitrogen. The four necks of the flask were equipped with stirring means, a reflux cooler, a thermometer for temperature control of the reaction, and means for addition of the monomers.

A premix was prepared in a separate vessel; it contained: 167 g of butyl acrylate (BA) [13.9 w% of monomers]

- 832 g of methyl methacrylate (MMA) [69.3 w% of monomers]
- 202g of methacrylic acid (MAc) [16.8 w% of monomers]
- 36g (= 3% of total monomer weight) of VAZO 67.

The premix was added drop by drop to the reaction vessel (total time: about 4 hours) whilst maintaining the temperature at 100°C. Forty-five minutes after the end of the addition of the premix, the first of three post-additions of 2.4 g (0.2 w%) VAZ067 with further 45 minutes intervals between additions was made. Hereafter the temperature was increased up to 110°C for 1 hour to complete the reaction. The solution had been thinned down with 300 g xylene. The binder had a solid content of 43 % and a viscosity of 89 dPa.s. This polymer solution contained 76.9 mequiv.methacryric acid/100g.

**Example 9** Postderivatization of example 8 with TBSiAcetate

504 g of the acid polymer described in ex. 13, 105 g tributylsilylacetate (CAS RN 22192-48-9) and 220 mL xylene had been put into a 1L 4-necked flask and kept under nitrogen. The four necks of the flask were equipped with stirring means, a thermometer for temperature control, a distillation column with cooler and receiver. The reaction mixture was incompatible when cold but not at temperatures above 75 °C. The mixture had been heated slowly to 136-150 °C. The yield was 56 % on acetic acid after distilling 220 ml. Three re-additions of 200 ml xylene and continuation of the distillation raised the yield to 94.5 % (converted TBSiAc). The final resin had a viscosity of 6 dPa.s, a Mw of 17 kD (Mw/Mn= 2.0) and a solids of 53.3 %.

Properties: A drawdown made of the polymer solution on glass yielded a clear dry film. The binder film got a light haze upon 1 day immersion in water. The binder eroded in 2 hours at pH 12.7 in a similar manner as a binder produced from the TBSiMA monomer.

Example 10 Postderivatization of example 8 with MTDMS-acetate (Methyltri-dimethylsiloxy-acetate)

302 g of the acid polymer described in example 8, 73 g MTDMS-acetate and 205 mL xylene had been put into a 1L 4-necked flask and kept under nitrogen. The four necks of the flask were equipped with stirring means, a thermometer for temperature control, a distillation column with cooler and receiver. The mixture had been heated slowly to 136-150 °C. The yield was 78 % on acetic acid after distilling 318 g. The final resin had a viscosity of 19 dPa.s and a solids of 56 %. [Properties: A drawdown made of the polymer solution on glass yielded a clear dry film that showed cracking after a week. The binder film turned haze and cheesy upon 1 day immersion in water. The binder eroded in 1 hour at pH 12.3 which is much slower than that of the acid precursor polymer.

Determination of the solids content

The solids content was determined by weighting before and after heating a sample for 1 hour at 120°C [standard test methods ISO 3233/ASTM 2697/DIN 53219]. (Table, Properties %)

Determination of the viscosity

The viscosity of binder solutions and of paints was determined with a Brookfield at 25°C [ASTM test method D2196-86]. (Table, Properties, dPa.s).

Determination of the molecular weight distribution of the polymers

The molecular weight distribution was determined by gel permeation chromatograpy (GPC) with tetrahydrofurane (THF) as solvent and polystyrene as reference. The weight average molecular weight (Mw) and the polydispersity (d=Mw/Mn) are reported in the table.

Determination of adhesion and water sensitivity of the binders

Adhesion was studied by evaluating the adhesion of a drawdown (gap 150um) either on glass or on an epoxy primer before and after immersion in water (during 24 hours when on glass, for the stated period of time when on epoxy primer). The changes caused by water immersion are reported.

Evaluation of the hydrolysability of the binders

The hydrolysability has been evaluated by making drawdowns on glass. The films had been dried for several days at ambient temperature. Then the films had been immersed in an alkaline solution (NaOH, pH 12.0-13.4). The number of minutes (induction time) before hydrolysis could be observed is called the induction time. Normally reported is the number of minutes to get full hydrolysis of the film.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

**1.** A process for the production of an acid group containing polymer resin comprising the steps of:-

(i) forming a pre-polymerisation composition comprising a monomer having at least one acid group in a side chain thereof and a solvent comprising at least one organic acid and;

(ii) reacting the said composition to form an acid group containing polymer resin incorporating the said organic acid in the solvent thereof.

**2.** A process according to claim 1, wherein the acid groups in the side chains of the polymer are selected from carboxylic acid, sulphonic acid or phosphoric acid groups.

**3.** A process according to any preceding claim, wherein the organic acid is used as a co-solvent with a further solvent.

**4.** A process according to any preceding claim, wherein the organic acid comprises a low boiling acid.

**5.** A process according to any preceding claim, wherein the organic acid comprises a high boiling acid.

**6.** A process according to any preceding claim, wherein the said polymer resin acid groups may be silylated in a subsequent step.

**7.** A process according to any preceding claim, wherein the silylation is carried out by transesterification of a silyl ester with the polymer acid groups to produce protected silylester side chain on the polymer and the acid of the ester group from the initial silyl ester

**8.** A process according to any preceding claim, wherein the silylation is carried out whilst removing the formed acid of the initial ester group.

**9.** A process according to any preceding claim, wherein the ester of the silylating agent is selected so as to form a low boiling acid as a by product of the silylation reaction which can then be removed from the system by a suitable technique such as thermal decomposition, vacuum distillation, azeotropic distillation with water or an organic solvent.

**10.** A process according to any preceding claim, wherein when the said polymer resin is to be utilised in a silylation reaction with polyacyloxysilylesters ie having more than one ester group attached to the silicon, the said solvent comprises at least one high boiling organic acid.

**11.** A process according to any preceding claim, wherein for subsequent monoacyloxysilylation reactions, the preferred resin solvent comprises a low boiling acid which can be removed during the said subsequent silylation reaction together with the acid formed by the silylation reaction.

**12.** A process according to any preceding claim, wherein the organic acid is chosen to be compatible with the mono or polyacyloxysilyesters used in a subsequent silylation reaction to avoid unwanted side reactions.

**13.** A process according to any preceding claim, wherein for subsequent polyacyloxysilylation, the organic acid is a high boiling organic acid prevent cross linking during silylation.

**14.** A process according to claim 12, wherein the organic acid in the solvent is chosen to be the acid complement of the acyloxy group if subsequent monoacyloxysilylation is required.

**15.** A process according to any preceding claim, wherein the boiling point of the organic acid is between 0°C - 220°C.

**16.** A process according to any preceding claim, wherein suitable organic acid solvents may be independently selected from one or more of acetic acid, enanthic acid, cychlohexane carboxylic acid, propionic acid, glycolic acid, acrylic acid, methacrylic acid, benzoic acid, salicylic acid, 3,5-dichlorobenzoic acid, lauric acid, stearic acid, nitrobenzoic acid, linoleic acid, ricinoleic acetic acid, propionic acid, oxalic acid, lactic acid, pivalic acid valeric acid, dimethyl acid, 12-hydroxy stearic acid, fluoroacetic acid, pulvic acid, abietic acid, mercaptobenzothiazole, O-cresotinic acid, naphthol-1-caboxylic acid, p-phenyl benzene sulfonic acid, p-oxy-benzoic acid, chloroacetic acid, dichloroacetic acid, naphthenic acid, beta -naphthalene sulfonic acid, naphthol-1-sulfonic acid, 5-chloro- alpha , alpha -bis (3,5-dichloro-2-hydroxy phenyl) toluene sulfonic acid, p-phenyl benzoic acid, p-toluene sulfonic acid, p-benzene chlorosulfonic acid, dimethyl dithio carbamic acid, diethyl dithio carbamic acid, dibutyl dithio carbamic acid, lithocholic acid, phenoxy acetic acid, 2,4-dichlorophenoxy acetic acid, oleic acid, versatic acid, nicotinic acid, penicillic acid and the like. or their sulfonic acid or phosphoric acid equivalents.

**17.** A process according to any preceding claim, wherein the low boiling organic acids may be independently selected from one or more of acetic acid, propionic acid, oxalic acid, lactic acid, pivalic acid valeric acid, dimethyl acetic acid, enanthic acid, cychlohexane carboxylic acid, propionic acid, glycolic acid, acrylic acid, methacrylic acid and the like or their sulfonic acid or phosphoric acid equivalents.

**18.** A process according to any preceding claim, wherein the high boiling acids are independently selected from one or more compatible acids of the following acids include benzoic acid, salicylic acid, 3,5-dichlorobenzoic acid, lauric acid, stearic acid, nitrobenzoic acid, linoleic acid, ricinoleic acid, 12-hydroxy stearic acid, fluoroacetic acid, pulvic acid, abietic acid, mercaptobenzothiazole, O-cresotinic acid, naphthol-1-caboxylic acid, p-phenyl benzene sulfonic acid, p-oxy-benzoic acid, chloroacetic acid, dichloroacetic acid, naphthenic acid, beta -naphthalene sulfonic acid, naphthol-1-sulfonic acid, 5-chloro- alpha , alpha -bis (3,5-dichloro-2-hydroxy phenyl) toluene sulfonic acid, p-phenyl benzoic acid, p-toluene sulfonic acid, p-benzene chlorosulfonic acid, dimethyl dithio carbamic acid, diethyl

dithio carbamic acid, dibutyl dithio carbamic acid, lithocholic acid, phenoxy acetic acid, 2,4-dichlorophenoxy acetic acid, oleic acid, versatic acid, nicotinic acid, penicillic acid and the like.

**19.** A process according to any preceding claim, wherein the acid group containing polymer is any suitable coating polymer having acid groups on the side chains thereof.

**20.** A process according to any preceding claim, wherein the level of acid bearing side chain and/or acid terminated monomer at the start of the polymerisation reaction as compared with total monomer is in the range 0.01 - 80% w/w.

**21.** A process according to any preceding claim, wherein the level of acid co-solvent expressed as a % of total solvent at the start of the polymerisation reaction is in the range 1-100% w/w.

**22.** A process according to any preceding claim, which includes the subsequent step of the protection of acid group containing side chains and/or terminal acid groups on polymers by reaction of at least one polymer acid group of formula (I)

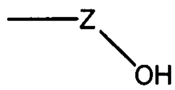

(I)

with a hydrocarbylsilyl compound of formula (II)

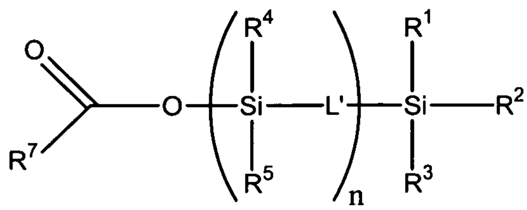

(II)

wherein each $R^4$ and $R^5$ may be hydroxyl or may be independently selected from alkyl, aryl, alkoxyl, aryloxyl, -L'-$SiR^1R^2R^3$, -L'- $(SiR^4R^5L')_n$-$SiR^1R^2R^3$, alkenyl, alkynyl, aralkyl or aralkyloxyl radicals optionally substituted by one or more substituents independently selected from the group comprising alkyl, alkoxyl, aralkyl, aralkyloxyl, hydroxyl, aryl, aryloxyl, halogen, amino (preferably, tertiary amino) or amino alkyl radicals, or $R_4$ or $R_5$ may independently be an -O-C (O)-$R^8$- group, wherein $R^8$ is defined as $R^7$ below;
wherein each $R^1$, $R^2$ and $R^3$ may independently represent hydrogen, hydroxyl, alkyl, alkenyl, alkynyl, alkoxyl, aryl, aryloxyl, aralkyl or aralkyloxyl radical optionally substituted by one or more substituents independently selected from the group comprising alkyl, alkoxyl, aralkyl, aralkyloxyl, aryl, aryloxyl, halogen, hydroxyl, amino (preferably, tertiary amino) or amino alkyl radicals, or $R^1$, $R^2$ or $R^3$ may independently be an -O-C(O)-$R^8$- group,
L' represents O, S, or $NR_6$, where $R_6$ is defined as is $R^7$ below,
each n independently represents a number of -Si ($R_4$) ($R_5$) - L'- groups from 0 to 1000,
wherein $R_7$ is a hydrogen atom, an aralkyl, aryl, alkenyl, alkynyl, or alkyl group optionally substituted, in the case of the hydrocarbyl radicals with one or more substituents selected from the equivalent substituents as defined for $R^1$ , $R^2$, $R^3$, $R^4$ and $R^5$ above;
while removing the formed acid group of formula (IV)

$$R^7C(O)OH \qquad (IV)$$

from the system to produce at least one protected acid group of formula (III)

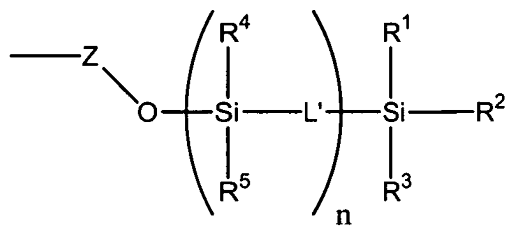

(III)

wherein Z represents:

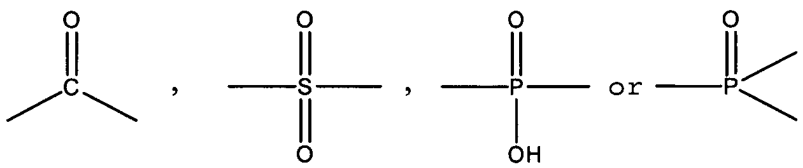

;

and $R^1$ , $R^2$ , $R^3$, $R^4$, $R^5$, $L^1$ and n are defined above except where $R^1$, $R^2$, $R^3$, $R^4$or $R^5$ are an --O-C (O) -$R^8$ group in formula II they may be replaced by an -O-C(O)-$R^9$ group in formula III;
wherein $R^9$ represents a hydrocarbyl or substituted hydrocarbyl group, wherein said substituted hydrocarbyl is substituted by one or more substituents independently selected from the group comprising alkyl, alkoxyl, aralkyl, aralkyloxyl, aryl, aryloxyl, hydroxyl, halogen, amino (preferably, tertiary amino) or amino alkyl radicals.

**23.** A process according to claim 22, wherein examples of the carboxyl radical part of formula $R^9C(O)OH$ may independently include but are not limited to acetyl, propionyl, butyryl, pivaloyl, oxaloyl, malonyl, succinyl, glutaryl, adipoyl, benzoyl, phthaloyl, isobutyroyl, sec-butyroyl, octanoyl, isooctanoyl, nonanoyl, isononanoyl, abietyl, dehydroabietyl, dihydroabietyl, naphtenyl, anthracenyl, abietyl dimer (Dymerex® ), dihydroabietyl (Foral® ) and the like and polymers or copolymers thereof.

**24.** A process according either claim 22 or 23, wherein examples of the organosilylated carboxylate compounds of general formula (II) include but are not limited to trimethylsilylformiate, dimethylsilyldiformiate, methylsilyltriformiate, tri-n-butyl 1-acetoxy-silane, di-n-butyl 1,1-diacetoxy-silane, n-butyl 1,1,1-triacetoxy-silane, tri-n-propyl-1-acetoxy silane, di-n-propyl 1,1-diacetoxy-silane, n-propyl 1,1,1-triacetoxy-silane, tri-t-butyl-1-acetoxy-silane, tri-isopropyl-1-acetoxy-silane, tri-isobutyl-1-acetoxy-silane, tri-methyl-1-acetoxysilane, di- methyl 1,1-diacetoxy-silane, methyl 1,1,1-triacetoxy-silane, triethyl- 1-acetoxy-silane, tribenzyl-1-acetoxy-silane, triamyl- 1-acetoxy-silane, triphenyl- 1-acetoxy-silane, trimethylsilylpropionate, t-butyldimethylsilylacetate, pentamethyl-1-acetoxydisiloxane, heptamethyl-1-acetoxy-trisiloxane, nonamethyl-1-acetoxy-tetrasiloxane, nonaethyl-1-acetoxytetrasiloxane, nona-t-butyl-1-acetoxy-tetrasiloxane, nonabenzyl-1-acetoxy-tetrasiloxane, nona-isopropyl-1-acetoxy-tetrasiloxane, nona-n-propyl-1-acetoxytetrasiloxane, nona-isobutyl-1-acetoxy-tetrasiloxane, nona-amyl-1-acetoxy-tetrasiloxane, nona-n-butyl-1-acetoxytetrasiloxane, nona-dodecyl-1-acetoxy-tetrasiloxane, nonahexyl-1-acetoxy-tetrasiloxane, nona-phenyl-1-acetoxytetrasiloxane, nona-octyl-1-acetoxy-tetrasiloxane, undecamethyl-1-acetoxy-pentasiloxane, undecaethyl-1-acetoxy-pentasiloxane, undeca-t-butyl-1-acetoxypentasiloxane, undecabenzyl-1-acetoxy-pentasiloxane, undeca-isopropyl-1-acetoxy-pentasiloxane, undeca-n-propyl-1-acetoxy-pentasiloxane, undeca-isobutyl-1-acetoxypentasiloxane, undeca-amyl-1-acetoxy-pentasiloxane, undeca-n-butyl-1-acetoxy-pentasiloxane, undeca-dodecyl-1-acetoxy-pentasiloxane, undeca-hexyl-1-acetoxypentasiloxane, undeca-phenyl-1-acetoxy-pentasiloxane, undeca-octyl-1-acetoxy-pentasiloxane tridecamethyl-1-acetoxy-hexasiloxane, tridecaethyl-1-acetoxy-hexasiloxane, trideca-t-butyl-1-acetoxy-hexasiloxane, tridecabenzyl-1-acetoxy-hexasiloxane, trideca-isopropyl-1-acetoxyhexasiloxane, trideca-n-propyl-1-acetoxy-hexasiloxane, trideca-isobutyl-1-acetoxy-hexasiloxane, trideca-amyl-1-acetoxy-hexasiloxane, trideca-n-butyl-1-acetoxyhexasiloxane, trideca-dodecyl-1-acetoxy-hexasiloxane, trideca-hexyl-1-acetoxy-hexasiloxane, trideca-phenyl-1-acetoxy-hexasiloxane, trideca-octyl-1-acetoxyhexasiloxane.

**25.** A process according to any of claims 22 to 24, wherein the acyloxysilanes are partially or totally hydrogenated carboxylate compounds as defined above.

**26.** A hydrolysable binder for an anti-fouling paint comprising an acid group protected polymer resin, wherein the protected acid group has a formula (III),

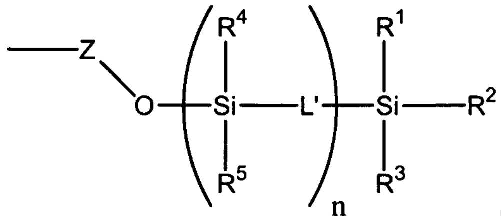

(III)

wherein Z represents:

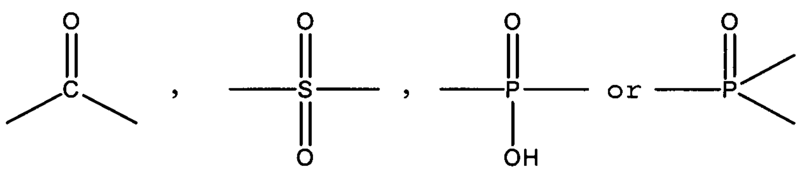

and wherein at least one of $R^1$, $R^2$, $R^3$, $R^4$ or $R^5$is the group -O-C(O)-$R^9$ , wherein $R^9$ represents a hydrocarbyl or substituted hydrocarbyl group, wherein said substituted hydrocarbyl is substituted by one or more substituents independently selected from the group comprising alkyl, alkoxyl, aralkyl, aralkyloxyl, aryl, aryloxyl, hydroxyl, halogen, amino (preferably, tertiary amino) or amino alkyl radicals;
wherein each $R^4$ and $R^5$ when not -O-C(O)-$R^9$ may be hydroxyl or may be independently selected from alkyl, aryl, alkoxyl, aryloxyl, -L' -$SiR^1R^2R^3$, -L' - $(SiR^4R^5L')_n$-$SiR^1R^2R^3$, alkenyl, alkynyl, aralkyl or aralkyloxyl radicals optionally substituted by one or more substituents independently selected from the group comprising alkyl, alkoxyl, aralkyl, aralkyloxyl, hydroxyl, aryl, aryloxyl, halogen, amino (preferably, tertiary amino) or amino alkyl radicals;
wherein each $R^1$, $R^2$ and $R^3$ when not -O-C (O) -$R^9$ may independently represent hydrogen, hydroxyl, alkyl, alkenyl, alkynyl, alkoxyl, aryl, aryloxyl, aralkyl or aralkyloxyl radical optionally substituted by one or more substituents independently selected from the group comprising alkyl, alkoxyl, aralkyl, aralkyloxyl, aryl, aryloxyl, halogen, hydroxyl, amino (preferably, tertiary amino) or amino alkyl radicals;
L' represents O, S, or $NR^6$, where $R^6$ is defined below,
each n independently represents a number of -Si ($R^4$) ($R^5$) - L'- groups from 0 to 1000,
wherein $R^6$ is a hydrogen atom, an aralkyl, aryl, alkenyl, alkynyl, or alkyl group optionally substituted, in the case of the hydrocarbyl radicals with one or more substituents selected from the equivalent substituents as defined for $R^1$ , $R^2$, $R^3$, $R^4$ and $R^5$ above.

**27.** A hydrolysable binder according to claim 26, wherein the Z group is attached to a polymer chain represented by $P^1$ , wherein the polymer comprises more than 30 carbons in the average polymer chain.

**28.** A hydrolysable binder according to either claim 26 or 27, wherein $R_4$ and $R_5$ when not -O-C(O)-$R^9$ each independently represent an alkyl, an alkoxyl, an aryl, an hydroxyl group or an -L' - $(SiR_4R_5L')_n$-$SiR_1R_2R_3$ group, wherein L', $R_1$, $R_2$, $R_3$, $R_4$ and $R_5$ are as defined above.

**29.** A hydrolysable binder according to any of claims 26 - 28, wherein n=0-100.

**30.** A hydrolysable binder according to any of claims 26 - 29, wherein $R_4$ and $R_5$ when not -O-C(O)-$R^9$ are each independently selected from the group comprising an alkyl group, an hydroxyl group, an alkoxyl group or an -L'-$(SiR_4R_5L')_n$-$SiR_1R_2R_3$ group, wherein L', $R_1$, $R_2$, $R_3$, $R_4$ and $R_5$ are as defined above.

**31.** A hydrolysable binder according to any of claims 26 - 30, wherein L' represents O.

**32.** A hydrolysable binder according to any of claims 26 - 31, wherein Z represents C.

**33.** A hydrolysable binder according to any of claims 26 - 32, wherein each $R^1$, $R^2$ and/or $R^3$ when not -O-C (O) -$R^9$ are the same.

**34.** A hydrolysable binder according to any of claims 26 - 33, wherein each $R^4$ and/or $R^5$ when not -O-C (O) -$R^9$ are the same.

**35.** A hydrolysable binder according to any of claims 26 - 34 wherein, when $R^4$ or $R^5$, when not OC(O)$R^9$, is selected as - L' - ($SiR^4R^5L'$ )$_n$-$SiR^1R^2R^3$, the $R^4$ and $R^5$ groups attached to the silicon radical in the selected group are not themselves, -L' - ($SiR^4R^5L'$)$_n$-$SiR^1R^2R^3$.

**36.** A hydrolysable binder according to any of claims 26 - 35, wherein $R^1$, $R^2$, $R^3$, $R^4$ and/or $R^5$ when not OC(O)$R^9$, each independently represent an alkyl group.

**37.** A hydrolysable binder according to any of claims 26 - 36, wherein $R^1$, $R^2$, $R^3$, $R^4$ and $R^5$ when not OC (O) $R^9$, are each independently selected from the group comprising methyl, ethyl, propyl, isopropyl, isobutyl, n-butyl, sec-butyl, t-butyl.

**38.** A hydrolysable binder according to any of claims 26 - 37, wherein examples of the carboxyl radical part of formula $R^9$C(O)OH may independently include but are not limited to acetyl, propionyl, butyryl, pivaloyl, oxaloyl, malonyl, succinyl, glutaryl, adipoyl, benzoyl, phthaloyl, isobutyroyl, sec-butyroyl, octanoyl, isooctanoyl, nonanoyl, isononanoyl, abietyl, dehydroabietyl, dihydroabietyl, naphtenyl, anthracenyl, abietyl dimer (Dymerex® ), dihydroabietyl (Foral® ) and the like and polymers or copolymers thereof.

**39.** A polymer resin produced by a process in accordance with any of claims 1 to 21.

**40.** A silylated polymer resin binder produced by a process in accordance with any of claims 22 to 25.

**41.** A paint composition comprising a binder as produced by a process in accordance with any of claims 22 to 25.

**42.** A paint composition comprising a binder in accordance with any of claims 26 to 38.

European Patent Office

# EUROPEAN SEARCH REPORT

Application Number
EP 03 25 1911

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1997, no. 03, 31 March 1997 (1997-03-31) & JP 08 301950 A (ARAKAWA CHEM IND CO LTD), 19 November 1996 (1996-11-19) * abstract * --- | 1-5, 15-21, 39,41,42 | C08F289/00 |
| X | DE 43 36 299 A (ARBO ROBOTRON MEDIZIN TECHNOLO) 11 May 1995 (1995-05-11) * column 4, line 20 - line 35 * --- | 1-5, 15-21, 39,41,42 | |
| X | US 6 172 149 B1 (ADAMS STANLEY C ET AL) 9 January 2001 (2001-01-09) * example 2 * --- | 1-5, 15-21, 39,41,42 | |
| A,D | EP 1 273 589 A (ATOFINA) 8 January 2003 (2003-01-08) * table 1 * --- | 22-38,40 | |
| A | EP 0 863 191 A (NIPPON PAINT CO LTD) 9 September 1998 (1998-09-09) * page 21, line 17 - line 37 * ----- | 26-38 | TECHNICAL FIELDS SEARCHED (Int.Cl.7) C08F |

The present search report has been drawn up for all claims

| Place of search | Date of completion of the search | Examiner |
|---|---|---|
| THE HAGUE | 15 August 2003 | Schmidt, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 25 1911

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2003

| Patent document cited in search report | | Publication date | Patent family member(s) | | | Publication date |
|---|---|---|---|---|---|---|
| JP 08301950 | A | 19-11-1996 | NONE | | | |
| DE 4336299 | A | 11-05-1995 | DE | 4336299 | A1 | 11-05-1995 |
| US 6172149 | B1 | 09-01-2001 | EP | 0994123 | A2 | 19-04-2000 |
| EP 1273589 | A | 08-01-2003 | FR | 2826964 | A1 | 10-01-2003 |
| | | | CN | 1396168 | A | 12-02-2003 |
| | | | EP | 1273589 | A1 | 08-01-2003 |
| | | | JP | 2003073383 | A | 12-03-2003 |
| | | | US | 2003120010 | A1 | 26-06-2003 |
| EP 0863191 | A | 09-09-1998 | JP | 10245504 | A | 14-09-1998 |
| | | | JP | 11124518 | A | 11-05-1999 |
| | | | JP | 11181334 | A | 06-07-1999 |
| | | | EP | 0863191 | A2 | 09-09-1998 |
| | | | US | 6013724 | A | 11-01-2000 |

EPO FORM P0459

For more details about this annex : see Official Journal of the European Patent Office, No. 12/82